# EUROPEAN PATENT APPLICATION

(11) **EP 4 407 784 A1**
(43) Date of publication of application: **31.07.2024**
(21) Application number: 21969350.4
(22) Date of filing: 28.12.2021
(51) Int. Cl.: H01M 50/586

(54) **BATTERY CELL AND METHOD FOR MANUFACTURE THEREOF AND DEVICE FOR MANUFACTURE THEREOF, BATTERY, AND ELECTRICAL APPARATUS**

(71) Applicant: Contemporary Amperex Technology Co., Limited, Ningde, Fujian 352100 (CN)
(72) Inventor: SHI, Shengyun, Ningde, Fujian 352100 (CN); GUO, Zhijun, Ningde, Fujian 352100 (CN)
(74) Representative: Rowlands, Stuart Michael
(86) International application number: PCT/CN2021/142123
(87) International publication number: WO 2023/122971

(57) **Abstract**

Embodiments of the present application relate to the technical field of batteries, and in particular to a battery cell and method for manufacture thereof and device for manufacture thereof, battery, and electrical apparatus. The battery cell comprises a housing, an end cover, an electrode assembly, an insulating member, and an insulating film; the housing is provided with an accommodating cavity, at least one end of which is open; the end cover closes the opening; the electrode assembly is accommodated within the accommodating cavity, and the electrode assembly is provided with two first surfaces and two second surfaces; the insulating member is arranged on the side, adjacent to the electrode assembly, of the end cover; the insulating film is arranged around the periphery of the electrode assembly and the insulating member, the insulating film comprises two first covering areas and two second covering areas, the two first covering areas are arranged corresponding to the two first surfaces, respectively, and the two second covering areas are arranged corresponding to the two second surfaces, respectively; a first clearance structure is arranged at the end, adjacent to the insulating member, of the second covering area so as to prevent the insulating film from interfering with the connection between the end cover and the housing. The present application reduces the occurrence of explosion points and pinholes in the process of welding of the end cover and the housing.

## Description

### Technical Field

The embodiments of the present application relate to the technical field of batteries, and in particular to a battery cell, a method and apparatus for manufacturing the battery cell, a battery, and a power consuming device.

### Background Art

A battery cell includes a shell, an end cap, an electrode assembly and an electrolyte, the electrode assembly and the electrolyte being accommodated in the shell, and the end cap being welded to the shell to seal the shell. During the process for manufacturing the battery cell, an insulating film is provided between the electrode assembly and the shell to insulate the electrode assembly from the shell, and the insulating film covers the electrode assembly to prevent the electrode assembly from coming into contact with an inner wall of the shell.

In the prior art, burst points and pinholes often appear when the end cap is welded to the shell, which directly affects the quality of battery cells or results in rejection of the battery cells.

### Summary of the Invention

In view of the above problem, the embodiments of the present application provide a battery cell, a method and apparatus for manufacturing the battery cell, a battery, and a power consuming device, in which an insulating film is provided with avoidance structures to reduce formation of burst points and pinholes during a welding process of an end cap and a shell.

According to a first aspect of the embodiments of the present application, a battery cell is provided. The battery cell includes a shell, an end cap, an electrode assembly, an insulating member and an insulating film, wherein the shell includes an accommodating cavity and includes an opening in at least one end thereof; the end cap closes the opening; the electrode assembly is accommodated in the accommodating cavity, and the electrode assembly includes two first surfaces oppositely disposed in a first direction and two second surfaces oppositely disposed in a second direction, the first direction and the second direction being parallel to the end cap; the insulating member is arranged on one side of the end cap close to the electrode assembly to isolate the end cap from the electrode assembly; the insulating film is arranged at an outer periphery of the electrode assembly and the insulating member in an enclosing manner, and the insulating film includes two first coverage areas and two second coverage areas, the two first coverage areas respectively corresponding to the two first surfaces, the two second coverage areas respectively corresponding to the two second surfaces, and a distance between the two first coverage areas increasing gradually and/or a distance between the two second coverage areas increasing gradually in a direction of the electrode assembly towards the end cap; and an end portion of the second coverage area close to the insulating member is provided with a first avoidance structure to prevent the insulating film from interfering with the connection between the end cap and the shell.

Since the distance between the two first coverage areas increases gradually and/or the distance between the two second coverage areas increases gradually in the direction of the electrode assembly towards the end cap, when the insulating film is arranged at a periphery of the electrode assembly and the insulating member in an enclosing manner, the two first coverage areas and/or the two second coverage areas are trapezoidal, so that in the enclosing direction of the insulating film, the end portions of the second coverage areas close to the insulating member, including the ends of the insulating film, may extend to the end cap and interfere with the end cap, so that during the welding process of the end cap and the shell, the insulating film is vaporized at high welding temperature to generate gas, and the gas overflows through a weld pool, causing formation of burst points and pinholes at the weld seam. Providing the first avoidance structures at the end portions of the second coverage areas close to the insulating member can prevent the insulating film from interfering with the connection between the end cap and the shell and thus prevent the insulating film from getting too close to the weld pool and vaporizing during the welding process, so as to reduce or avoid the formation of burst points and pinholes at the weld seam between the end cap and the shell, thereby improving the quality of the battery cell.

In some embodiments, the two second coverage areas are respectively connected to two sides of one of the first coverage areas.

According to the solution described above, in the enclosing direction of the insulating film, the two second coverage areas each include one end of the insulating film, the interference with the end cap is most likely to occur at the end of the insulating film, and providing the first avoidance structures at the end of the insulating film can prevent or avoid the insulating film from interfering with the connection between the end cap and the shell to a greater extent.

In some embodiments, the first avoidance structure is provided at an end portion of the second coverage area that is away from the first coverage area connected to the second coverage area.

According to the solution described above, when the second coverage area is connected to the first coverage area, the end of the insulating film is located at the end portion of the second coverage area that is away from the first coverage area connected to the second coverage area, so that providing the first avoidance structure at this end portion can prevent or avoid the insulating film from interfering with the connection between the end cap and the shell to the greatest extent.

In some embodiments, the first avoidance structure is a chamfer or a notch.

According to the solution described above, the chamfer or the notch is a structure formed on the insulating film by means of material removal, and therefore both the structures can reduce the size of the insulating film to prevent the insulating film from interfering with the connection between the end cap and the shell.

In some embodiments, the dimension of the first avoidance structure in a thickness direction of the insulating member is less than the thickness of the insulating member at the connection with the insulating film.

According to the solution described above, the first avoidance structures prevent the insulating film from extending from the insulating member to the end cap and then interfering with the connection between the end cap and the shell, but the first avoidance structures will not affect the connection between the insulating film and the insulating member, so that the insulating film can be connected to the insulating member and then cover the electrode assembly, further preventing the electrode assembly from being insulated from the shell.

In some embodiments, the insulating film does not exceed the insulating member in the direction of the electrode assembly towards the end cap.

According to the solution described above, since the insulating film does not exceed the insulating member in the direction of the electrode assembly towards the end cap, the insulating film will not extend to an edge of the end cap and thus will not interfere with the welding between the end cap and the shell.

In some embodiments, the insulating film further includes two third coverage areas which are respectively connected to the two sides of the other first coverage area and are respectively disposed corresponding to the two second surfaces, one of the third coverage areas and one of the second coverage areas jointly covering one of the second surfaces, the other third coverage area and the other second coverage area jointly covering the other second surface, and an end portion of the third coverage area close to the insulating member being provided with a second avoidance structure to prevent the insulating film from interfering with the connection between the end cap and the shell.

According to the solution described above, when the third coverage areas are connected to the first coverage areas, in the enclosing direction of the insulating film, the other two ends of the insulating film are located in the third coverage areas, and providing the second avoidance structures at these ends can prevent the insulating film from interfering with the connection between the end cap and the shell.

In some embodiments, the second avoidance structure is provided at an end portion of the third coverage area that is away from the first coverage area connected to the third coverage area.

According to the solution described above, when the third coverage area is connected to the first coverage area, the end of the insulating film is located at the end portion of the third coverage area that is away from the first coverage area connected to the third coverage area, and providing the second avoidance structure here can prevent or avoid the insulating film from interfering with the connection between the end cap and the shell to the greatest extent.

In some embodiments, the second avoidance structure is a chamfer or a notch.

According to the solution described above, the chamfer or the notch is a structure formed on the insulating film and in the third coverage area by means of material removal, and therefore both the structures can reduce the size of the insulating film to prevent the insulating film from interfering with the connection between the end cap and the shell.

In some embodiments, the second coverage area at least partially overlaps with the third coverage area.

According to the solution described above, the third coverage area overlaps with the second coverage area to prevent formation of a gap in the insulating film, so as to prevent the electrode assembly from coming into contact with the shell at the gap of the insulating film due to the insulating film not completely covering the electrode assembly.

In some embodiments, the second avoidance structure at least partially overlaps with the first avoidance structure.

When the second coverage area at least partially overlaps with the third coverage area, the positions where the second coverage area and the third coverage area can interfere with the connection between the end cap and the shell are basically consistent. Therefore, by means of configuring the second avoidance structure to at least partially overlap with the first avoidance structure, neither the second coverage area nor the third coverage area interferes with the connection between the end cap and the shell.

In some embodiments, the width of the second surface in the first direction is less than that of the first surface in the second direction.

According to the solution described above, the second surface is narrower than the first surface and has a smaller amount of expansion than the first surface when the electrode assembly expands during charging and discharging, the second coverage area corresponds to the second surface, and the first avoidance structure is located on the second surface, so that the first avoidance structure corresponds to the second surface, and when the electrode assembly expands, the second surface will not break a separator from the first avoidance structure due to the small amount of expansion and thus will not come into contact with the shell.

In some embodiments, the insulating film further includes a fourth coverage area, which is connected between the two first coverage areas and covers an end surface of the electrode assembly away from the end cap.

According to the solution described above, the electrode assembly is completely isolated from the shell by means of the insulating film, preventing the electrode assembly from coming into contact with the shell at any position.

In some embodiments, the insulating film is connected to a peripheral wall of the insulating member by means of hot melting.

According to the solution described above, the hot-melting connection method can quickly achieve the connection between the insulating film and the insulating member to improve the connection efficiency, and there is no need to use other media for connection, thereby saving the cost.

In some embodiments, the dimension of the insulating member in the first direction is greater than a distance between the two first surfaces, and/or, the dimension of the insulating member in the second direction is greater than a distance between the two second surfaces.

According to the solution described above, in order to allow the insulating film to cover the surface of the same side where both the electrode assembly and the insulating member are located, the distance between the two first coverage areas increases gradually and/or the distance between the second coverage areas increases gradually in the direction of the electrode assembly towards the end cap.

According to a second aspect of the embodiments of the present application, a battery is provided, the battery including the battery cell of any one of the embodiments in the first aspect described above.

According to the solution described above, there will be no burst point or pinhole at the weld seam between the end cap and the shell of the battery cell, or the probability of occurrence of burst points and pinholes is small, thereby improving the quality of the battery cell so as to improve the quality of the battery.

According to a third aspect of the embodiments of the present application, a power consuming device is provided, the power consuming device including the battery cell of any one of the embodiments in the first aspect, the battery cell being configured to supply electric energy.

According to the solution described above, there will no burst point or pinhole at the weld seam between the end cap and the shell of the battery cell, or the probability of occurrence of burst points and pinholes is small, which improves the quality of the battery cell, enables the battery cell to supply power to the power consuming device for a long time, and prolongs the service life and improves the safety of the power consuming device.

According to a fourth aspect of the embodiments of the present application, a method for manufacturing a battery cell is provided. The method includes:
providing a shell which includes an accommodating cavity and includes an opening in at least one end thereof;
providing an end cap and an insulating member arranged on one side of the end cap;
providing an electrode assembly which includes two first surfaces oppositely disposed in a first direction and two second surfaces oppositely disposed in a second direction;
assembling the end cap, the insulating member and the electrode assembly, with the insulating member being parallel to the first direction and the second direction, and the insulating member being located on one side of the end cap close to the electrode assembly to isolate the end cap from the electrode assembly; and
providing an insulating film, and arranging the insulating film at a periphery of the electrode assembly and the insulating member in an enclosing manner, wherein the insulating film includes two first coverage areas and two second coverage areas, the two first coverage areas respectively corresponding to the two first surfaces, the two second coverage areas respectively corresponding to the two second surfaces, and a distance between the two first coverage areas increasing gradually and/or a distance between the two second coverage areas increasing gradually in a direction of the electrode assembly towards the end cap; and an end portion of the second coverage area close to the insulating member is provided with a first avoidance structure to prevent the insulating film from interfering with the connection between the end cap and the shell;
accommodating the electrode assembly in the accommodating cavity; and
connecting the end cap to the shell to close the opening.

With the method described above, on the premise of ensuring a good insulation effect between the electrode assembly and the end cap and between the electrode assembly and the shell, providing the first avoidance structures at the end portions of the second coverage areas close to the insulating member can prevent the insulating film from interfering with the connection between the end cap and the shell and thus prevent the insulating film from getting too close to the weld pool and vaporizing during the welding process, so as to reduce or avoid the formation of burst points and pinholes at the weld seam between the end cap and the shell, thereby improving the quality of the manufactured battery cell.

According to a fifth aspect of the embodiments of the present application, an apparatus for manufacturing a battery cell is provided. The apparatus includes:
a first provision device configured to provide a shell which includes an accommodating cavity and includes an opening in at least one end thereof;
a second provision device configured to provide an end cap and an insulating member arranged on one side of the end cap;
a third provision device configured to provide an electrode assembly which includes two first surfaces oppositely disposed in a first direction and two second surfaces oppositely disposed in a second direction;
a first assembly device configured to assemble the end cap, the insulating member and the electrode assembly, with the insulating member being parallel to the first direction and the second direction, and the insulating member being located on one side of the end cap close to the electrode assembly to isolate the end cap from the electrode assembly;
a fourth provision device configured to provide an insulating film and arrange the insulating film at a periphery of the electrode assembly and the insulating member in an enclosing manner, wherein the insulating film includes two first coverage areas and two second coverage areas, the two first coverage areas respectively corresponding to the two first surfaces, the two second coverage areas respectively corresponding to the two second surfaces, and a distance between the two first coverage areas increasing gradually and/or a distance between the two second coverage areas increasing gradually in a direction of the electrode assembly towards the end cap; and an end portion of the second coverage area close to the insulating member is provided with a first avoidance structure to prevent the insulating film from interfering with the connection between the end cap and the shell;
a second assembly device configured to accommodate the electrode assembly in the accommodating cavity; and
a third assembly device configured to connect the end cap to the shell to close the opening.

With the apparatus described above, the insulating member provided by the second device provides a good insulation effect between the electrode assembly and the end cap, and the insulating film provided by the fifth device provides a good insulation effect between the electrode assembly and the shell, so that on the premise of ensuring a good insulation effect between the electrode assembly and the end cap and between the electrode assembly and the shell, providing the first avoidance structures at the end portions of the second coverage areas close to the insulating member can prevent the insulating film from interfering with the connection between the end cap and the shell and thus prevent the insulating film from getting too close to the weld pool and vaporizing during the welding process, so as to reduce or avoid the formation of burst points and pinholes at the weld seam between the end cap and the shell, thereby improving the quality of the manufactured battery cell.

According to the embodiments of the present application, providing the first avoidance structures at the end portions of the second coverage areas close to the insulating member can prevent the insulating film from interfering with the connection between the end cap and the shell and thus prevent the insulating film from getting too close to the weld pool and vaporizing during the welding process, so as to reduce or avoid the formation of burst points and pinholes at the weld seam between the end cap and the shell, thereby improving the quality of the battery cell.

The aforementioned description is merely an overview of the technical solutions of the embodiments of the present application. In order to more clearly understand the technical means of the embodiments of the present application to implement the technical means according to the content of the description, and in order to make the above and other objectives, features and advantages of the embodiments of the present application more obvious and understandable, specific implementations of the present application are illustratively described below.

### Brief Description of the Drawings

In order to more clearly illustrate the technical solutions in the embodiments of the present application, the drawings to be used in the description of the embodiments will be described briefly below. Obviously, the drawings in the following description are merely some embodiments of the present application. For those of ordinary skill in the art, other drawings can also be obtained according to these drawings without creative efforts.
FIG. 1 is a structural schematic diagram of a power consuming device according to an embodiment of the present application.
FIG. 2 is a structural schematic exploded diagram of a battery according to an embodiment of the present application.
FIG. 3 is a structural schematic exploded diagram of a battery cell according to an embodiment of the present application.
FIG. 4 is a structural schematic diagram of a battery cell according to an embodiment of the present application, with a shell removed.
FIG. 5 is a structural schematic enlarged diagram of part A in FIG. 4.
FIG. 6 is a structural schematic diagram of an insulating film according to an embodiment of the present application in an unfolded state.
FIG. 7 is a structural schematic diagram of another battery cell according to an embodiment of the present application, with a shell removed.
FIG. 8 is a structural schematic enlarged diagram of part B in FIG. 7.
FIG. 9 is a structural schematic exploded diagram of an insulating film and an electrode assembly according to an embodiment of the present application.
FIG. 10 is a structural schematic diagram of another insulating film according to an embodiment of the present application in an unfolded state.
FIG. 11 is a flow chart of a method for manufacturing a battery cell according to an embodiment of the present application.
FIG. 12 is a structural diagram of an apparatus for manufacturing a battery cell according to an embodiment of the present application.

List of reference numerals: 2. vehicle; 200. battery; 210. controller; 220. motor; 201. first case; 202. second case; 300. battery module; 400. battery cell; 410. shell; 420. end cap; 421. electrode terminal; 430. electrode assembly; 431. first surface; 432. second surface; 440. insulating member; 450. insulating film; 451. first coverage area; 452. second coverage area; 4521. first avoidance structure; 453. third coverage area; 4531. second avoidance structure; 454. fourth coverage area; 510. first provision device; 520. second provision device; 530. third provision device; 540. first assembly device; 550. fourth provision device; 560. second assembly device; 570. third assembly device.

### Detailed Description of Embodiments

In order to make the objectives, technical solutions and advantages of embodiments of the present application clearer, the technical solutions in the embodiments of the present application will be described clearly and completely below with reference to the accompanying drawings in the embodiments of the present application. It will be apparent that, the embodiments described are some of, rather than all of, the embodiments of the present application. All other embodiments obtained by those of ordinary skill in the art on the basis of the embodiments of the present application without creative efforts shall fall within the scope of protection of the present application.

Unless otherwise defined, all technical and scientific terms used herein have the same meanings as those commonly understood by those skilled in the art to which the present application belongs. The terms used in the description of the present application are merely for the purpose of describing specific embodiments, and are not intended to limit the present application.

The terms "comprise" and "include" in the description, claims and drawings of the present application and any variations thereof are intended to cover and not exclude other contents. The word "a/an" or "one" does not exclude existence of multiple.

The phrase "embodiment" mentioned herein means that the specific features, structures, or characteristics described in conjunction with the embodiment can be encompassed in at least one embodiment of the present application. The phrase "embodiment" in various places in the description does not necessarily refer to the same embodiment, nor is it an independent or alternative embodiment exclusive of other embodiments. Those skilled in the art understand explicitly or implicitly that the embodiment described herein may be combined with another embodiment.

The term "and/or" herein is merely the description of an associated relationship of associated objects, and indicates that three relationships may exist. For example, A and/or B can indicate only A exists, both A and B exist, and only B exists. In addition, the character "/" herein generally indicates an "or" relationship between the associated objects.

The orientation terms in the following description all indicate directions shown in the accompanying drawings, and do not limit specific structures of a battery cell, a battery, a power consuming device or an apparatus for manufacturing the battery cell in the present application. For example, in the description of the present application, the orientation or positional relationships indicated by the terms "central", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and for simplicity of description, rather than indicating or implying that the device or element referred to must have a particular orientation or be constructed and operated in a particular orientation, and thus cannot be construed as a limitation on the present application.

In addition, expressions indicating directions, such as an X-direction, a Y-direction and a Z-direction, which are used to describe operations and configurations of various members of the battery cell, the battery, the power consuming device or the apparatus for manufacturing the battery cell of the embodiments are not absolute but relative, and although the indications are appropriate when various members of a battery pack are in positions shown in the figures, when the positions are changed, the directions should be interpreted differently to correspond to the changes.

In addition, the terms "first", "second", etc. in the description, claims, or the accompanying drawings of the present application are used for distinguishing different objects, instead of describing a specific order, and thus can explicitly or implicitly include one or more features.

In the description of the present application, unless otherwise stated, "a plurality of" means two or more (including two), and similarly, "a plurality of groups" means two or more groups (including two groups).

In the description of the present application, it should be noted that unless otherwise explicitly specified and defined, the terms "mounting", "connected", and "connection" should be understood in a broad sense. For example, "connected" or "connection" of mechanical structures can be a physical connection. For example, the physical connection can be a fixed connection, by means of, for example, a fixing member, such as a screw, a bolt, etc.; or the physical connection can be a detachable connection, for example, a mutual snap-fit or bayonet connection; or the physical connection can be an integral connection, for example, welding, bonding, or integral molding. In addition to a physical connection, "connected" or "connection" of circuit structures can be an electrical connection or a signal connection. For example, it can be a direct connection, that is, the physical connection, or an indirect connection by means of at least one intermediate element, as long as the circuits are connected. It can further be internal communication between two elements. In addition to a signal connection by means of a circuit, the signal connection can be a signal connection by means of a media medium, such as radio waves. For those of ordinary skill in the art, the specific meanings of the terms in the present application can be construed according to specific circumstances.

In the present application, the battery cell may be a lithium-ion battery cell, a lithium-sulfur battery cell, a sodium-lithium-ion battery cell, a sodium-ion battery cell, a magnesium-ion battery cell, etc., which is not limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which is also not be limited in the embodiment of the present application.

The battery cell includes a shell, an end cap, an electrode assembly, and an electrolyte.

The electrode assembly is composed of a positive electrode plate, a negative electrode plate, and a separator. The battery cell generates electricity primarily by the movement of metal ions across the separator and between the positive electrode plate and the negative electrode plate.

The shell and the end cap are generally metal parts, such as aluminum, aluminum alloy, etc. The shell includes an accommodating cavity, the electrode assembly and the electrolyte are both accommodated in the accommodating cavity of the shell, the accommodating cavity includes an opening, and the end cap is welded to the shell at the opening to seal the electrode assembly and the electrolyte in the shell.

During a process for manufacturing the battery cell, an insulating film is provided between the electrode assembly and the shell to insulate the electrode assembly from the shell, and the insulating film covers the electrode assembly to prevent short circuit caused by the electrode assembly coming into contact with an inner wall of the shell.

The inventors found that burst points and pinholes often appear when the end cap is welded to the shell, which directly affects the quality of battery cells or even results in rejection of the battery cells.

The inventor has found through research that there is a trace of melting of the insulating film near an edge of the end cap, and has found through experiments that the cause of burst points and pinholes at the weld seam between the end cap and the shell of the battery cell is that the insulating film is too close to the edge of the end cap, resulting in gasification of the insulating film at high welding temperature during the welding process, and the gas generated by vaporization of the insulating film needs to overflow through the weld pool to break through the weld pool, so that the defects of burst points and pinholes appear at the weld seam formed after the weld pool solidifies.

The reason why the insulating film is too close to the edge of the end cap is that the insulating film is provided to achieve isolation of the electrode assembly from the shell, and if the insulating film is too far away from the end cap, the insulating film may not fully protect the electrode assembly, which makes it possible for the electrode assembly to be in contact with the shell near the end cap.

Therefore, it is necessary to control the distance between the insulating film and the end cap, so that the insulating film can not only fully protect the electrode assembly, but also not be vaporized during the process of welding the end cap and the shell.

However, since the shape enclosed by the insulating film is often not a regular cube, the insulating film cannot be flush at the end close to the end cap, resulting in different distances between different parts of the end of the insulating film close to the end cap and the end cap, so that under the premise of ensuring that the insulating film can completely cover the electrode assembly, some parts of the insulating film may extend to the edge of the end cap or be too close to the edge of the end cap, and interfere with the welding of the end cap to the shell and gasify during the welding process to cause formation of burst point and pinhole defects at the weld seam.

In view of this, the embodiments of the present application provides a battery cell, a method and apparatus for manufacturing the battery cell, a battery, and a power consuming device, in which first avoidance structures are provided on the insulating film of the battery cell to prevent some parts of the insulating film from extending to the edge of the end cap or being too close to the edge of the end cap so as to reduce the formation of burst points and pinholes during the welding process of the end cap and the shell.

The battery in the embodiments of the present application is applicable to various devices using a battery, such as mobile phones, portable apparatuses, laptops, battery cars, electric toys, electric tools, electric vehicles, ships, and spacecrafts which include, for example, airplanes, rockets, space shuttles and space vehicles, but not limited thereto.

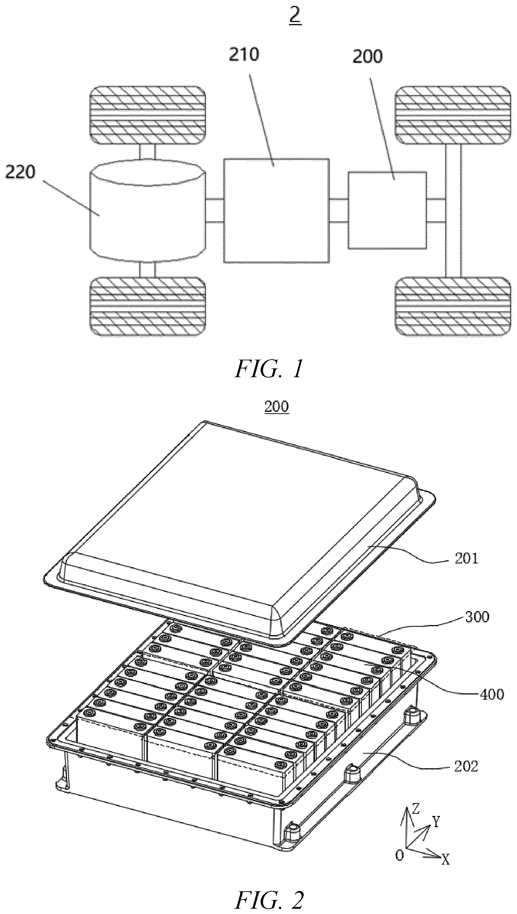

As shown in FIG. 1, FIG. 1 is a structural schematic diagram of a power consuming device according to an embodiment of the present application, taking a vehicle 2 as an example for illustration of the power consuming device. The vehicle 2 may be a fuel vehicle, a gas vehicle, or a new energy vehicle. The new energy vehicle may be a battery electric vehicle, a hybrid electric vehicle, an extended-range vehicle, etc. The vehicle 2 includes a battery 200, a controller 210, and a motor 220. The battery 200 is configured to supply power to the controller 210 and the motor 220 as a power source for operating and driving the vehicle 2. For example, the battery 200 is configured to meet working power consuming requirements of the vehicle 2 during starting, navigating, and running. For example, the battery 200 supplies power to the controller 210, the controller 210 controls the battery 200 to supply power to the motor 220, and the motor 220 receives and uses the power from the battery 200 as the power source for driving the vehicle 2, replacing or partially replacing fuel or natural gas which supplies driving power to the vehicle 2.

As shown in FIG. 2, in order to enable the battery 200 to achieve higher functionality to meet the use requirements, the battery 200 may include a plurality of battery modules 300 electrically connected to each other, and a case including a first case 201 and a second case 202, wherein the first case 201 and the second case 202 are snap-fitted to each other, and the plurality of battery modules 300 are arranged in a space enclosed by the first case 201 and the second case 202. The first case 201 and the second case 202 may be made of aluminum, aluminum alloy or other metallic materials. In some embodiments, the first case 201 is connected to the second case 202 in a sealing manner.

As shown in FIG. 2, the battery module 300 may include one or more battery cells 400. When the battery module 300 includes a plurality of battery cells 400, the plurality of battery cells 400 may be electrically connected to each other in series, in parallel, or in series-parallel to achieve a large current or voltage. The series-parallel connection refers to a combination of the series connection and the parallel connection. In addition, the plurality of battery cells 400 may be arranged in a predetermined regular manner. As shown in FIG. 2, the battery cells 400 may be placed vertically, the height direction of the battery cells 400 is consistent with a Z-direction, and the plurality of battery cells 400 are arranged side by side in a Y-direction. Alternatively, the battery cells 400 may be placed flat, the width direction of the battery cells 400 is consistent with the Z-direction, the plurality of battery cells 400 may be stacked in at least one layer in the Z-direction, and each layer includes a plurality of battery cells 400 arranged in an X-direction or the Y-direction.

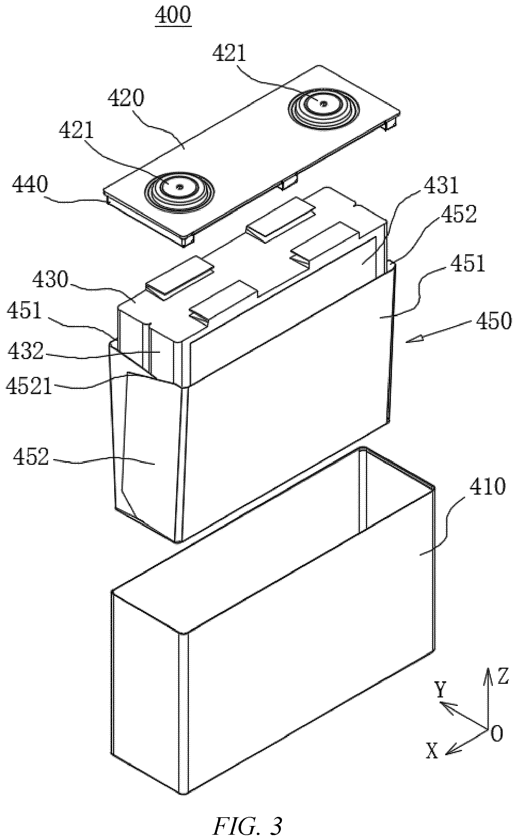

FIG. 3 is an exploded view of a battery cell provided according to an embodiment of the present application. As shown in FIG. 3, the battery cell 400 according to the embodiment of the present application includes a shell 410, an end cap 420, an electrode assembly 430, an insulating member 440, and an insulating film 450, wherein the shell 410 includes an accommodating cavity, and an includes an opening in at least one end thereof; the end cap 420 closes the opening; the electrode assembly 430 is accommodated in the accommodating cavity, the electrode assembly 430 includes two first surfaces 431 oppositely disposed in a first direction and two second surfaces 432 oppositely disposed in a second direction, the first direction and the second direction being parallel to the end cap 420; the insulating member 440 is disposed on one side of the end cap 420 close to the electrode assembly 430 to isolate the end cap 420 from the electrode assembly 430; the insulating film 450 is disposed at a periphery of the electrode assembly 430 and the insulating member 440 in an enclosing manner, and the insulating film 450 includes two first coverage areas 451 and two second coverage areas 452, the two first coverage areas 451 respectively corresponding to the two first surfaces 431, the two second coverage areas 452 respectively corresponding to the two second surfaces 432, and the distance between the two first coverage areas 451 increasing gradually and/or the distance between the two second coverage areas 452 increasing gradually in the direction of the electrode assembly 430 towards the end cap 420; and an end portion of the second coverage area 452 close to the insulating member 440 is provided with a first avoidance structure 4521 to prevent the insulating film 450 from interfering with the connection between the end cap 420 and the shell 410.

The electrode assembly 430 is composed of a positive electrode plate, a negative electrode plate, and a separator. The operation of the battery cell 400 mainly relies on the movement of metal ions between the positive electrode plate and the negative electrode plate. The positive electrode plate includes a positive current collector and a positive active material layer, a surface of the positive current collector is coated with the positive active material layer, a portion of the current collector that is not coated with the positive active material layer protrudes from a portion of the current collector that is coated with the positive active material layer, and the portion of the current collector that is not coated with the positive active material layer serves as a positive tab. Taking a lithium ion battery as an example, the positive electrode current collector may be made of an aluminum, and the positive electrode active material may be lithium cobalt oxide, lithium iron phosphate, ternary lithium, lithium manganate, etc. The negative electrode plate includes a negative current collector and a negative active material layer, a surface of the negative current collector is coated with the negative active material layer, a portion of the current collector that is not coated with the negative active material layer protrudes from a portion of the current collector that is coated with the negative active material layer, and the portion of the current collector that is not coated with the negative active material layer serves as a negative tab. The negative electrode current collector may be made of copper, and the negative electrode active material may be carbon, silicon, etc. In order to ensure that no fusing occurs when a large current passes, a plurality of positive electrode tabs are provided and are stacked together, and a plurality of negative electrode tabs are provided and are stacked together. The separator may be of a material such as polypropylene (PP), polyethylene (PE), etc. In addition, the electrode assembly 430 may be of a wound structure or a laminated structure, which will not be limited in the embodiments of the present application.

As shown in FIG. 3, the first direction may be the Y-direction in the figure, and the second direction may be the X-direction in the figure. Correspondingly, the first surfaces 431 of the electrode assembly 430 may be the two surfaces oppositely disposed in the Y-direction in the figure, and the second surface 432 of the electrode assembly 430 may be the two surfaces oppositely disposed in the X-direction in the figure. Of course, the first direction and the second direction may also be interchanged, such that the first surfaces 431 of the electrode assembly 430 may be the two surfaces oppositely disposed in the X-direction in the figure, and the second surface 432 of the electrode assembly 430 may be the two surfaces oppositely disposed in the Y-direction in the figure. It should be understood that the two first surfaces 431 are not necessarily facing each other, and there may be a certain angle between the two first surfaces 431. Similarly, the two second surfaces 432 may not be directly facing each other, and there may be a certain angle between the two second surfaces.

The shell 410 includes an accommodating cavity inside to form a hollow cavity structure. One of surfaces of the shell 410 includes an opening, that is, this surface does not include a shell wall to allow the accommodating cavity to be in communication with the outside of the shell 410, so that the electrode assembly 430 can be accommodated in the accommodating cavity, the end cap 420 is combined with the shell 410 at the opening of the shell 410, and after the electrode assembly 430 is placed in the accommodating cavity, the accommodating cavity is filled with an electrolyte and sealed. The shell 410 is shaped depending on the shape of a combination of one or more electrode assemblies 430. For example, the shell 410 may be a hollow cuboid or a hollow cube, and the accommodating cavity 410 is sized depending on the number and size of the combination of the electrode assemblies 430. The shell 410 may be made of a metal material or plastic, and optionally, the shell 410 is made of aluminum or an aluminum alloy.

The end cap 420 is substantially flat plate-shaped, the end cap 420 is combined with the shell 410 at the opening of the shell 410 and covers the opening of the shell 410. For example, the end cap 420 may be a metal plate and is connected to the shell 410 by means of welding, so as to seal the electrode assembly 430 in the shell 410. the end cap 420 is provided with two electrode terminals 421. The two electrode terminals 421 include a positive electrode terminal and a negative electrode terminal, the positive electrode terminal being connected to a positive tab of the electrode assembly 430, and the negative electrode terminal being connected to a negative tab of the electrode assembly 430. When the power consuming device is connected to the positive electrode terminal and the negative electrode terminal, current flows in or out between the electrode assembly 430 and the power consuming device via the positive electrode terminal and the negative electrode terminal, achieving the electrical connection between the battery cell 400 and the power consuming device.

The insulating member 440 is arranged on one side of the end cap 420 close to the electrode assembly 430. The insulating member 440 may be connected to the end cap 420, and for example, the insulating member 440 is connected to the end cap 420 by means of hot melting or bonding. The insulating member 440 may be made of plastic, rubber, resin, ceramic, etc., which is not limited in the embodiments of the present application. The insulating member 440 may be flat plate-shaped substantially the same as the shape of the end cap 420, and the insulating member 440 is provided between the end cap 420 and the electrode assembly 430 to prevent short circuit caused by the electrode assembly 430 coming into contact with the end cap 420. The edge of the insulating member 440 is located within the edge of the end cap 420 to prevent the insulating member 440 from affecting the connection between the end cap 420 and the opening of the shell 410.

The insulating film 450 is made of a material including one or more of polyimide, polyethylene, polyvinylidene fluoride and polytetrafluoroethylene. The insulating film 450 covers the surfaces of the electrode assembly 430 to separate the electrode assembly 430 from the shell 410. The insulating film 450 may cover, in a tubular shape, a peripheral wall of the electrode assembly 430, with the two first surfaces 431 and the two second surfaces 432 of the electrode assembly 430 all being part of the peripheral wall of the electrode assembly 430. When the insulating film 450 covers, in a tubular shape, the peripheral wall of the electrode assembly 430, the insulating film 450 includes one or more pairs of ends in a circumferential direction of the tubular structure, each pair of ends of the insulating film 450 are joined with each other, in a manner of direct connection or just being close or each other overlapping with each other in position.

After expanding during use, the electrode assembly 430 may come into contact with the shell 410 and generate a compressing force. Providing the insulating film 450 can prevent short circuit caused by the direct contact between the shell 410 and the electrode assembly 430, and also prevent breakage of the electrode plate of the electrode assembly 430 caused by the shell 410 directly compressing the electrode assembly 430 under an excessive compressing force. Therefore, using the insulating film 450 can well protect the electrode assembly 430 to improve the use safety of the battery cell 400 and prolong the service life of the battery cell 400.

The first coverage area 451 corresponding to the first surface 431 means that the first coverage area 451 is at least partially located outside the first surface 431. It should be noted that the first coverage area 451 may fit with the first surface 431 or may not fit with the first surface 431, and similarly, the second coverage area 452 may fit with the second surface 432 or may not fit with the second surface 432. The first coverage area 451 extends from the outside of the first surface 431 to the outside of the insulating member 440, and the second coverage area 452 extends from the outside of the second surface 432 to the outside of the insulating member 440, so that the insulating film 450 encloses the electrode assembly 430 and the insulating member 440 therein, and the electrode assembly 430 is limited between the insulating film 450 and the insulating member 440 without coming into contact with the shell 410 or the end cap 420, preventing the battery cell 400 from short circuiting.

The first avoidance structure 4521 may be formed by means of cutting off the end of the insulating film 450 close to the end cap 420, or by means of bending the part of the insulating film 450 close to the end cap 420 away from the end cap 420, as long as the insulating film 450 can be prevented from getting too close to the end cap 420.

Since the distance between the two first coverage areas 451 increases gradually and/or the distance between the two second coverage areas 452 increases gradually in the direction of the electrode assembly 430 towards the end cap 420, when the insulating film 450 is arranged at the periphery of the electrode assembly 430 and the insulating member 440 in an enclosing manner, the two first coverage areas 451 and/or the two second coverage areas 452 are trapezoidal, so that in the enclosing direction of the insulating film 450, the end portions of the second coverage areas 452 close to the insulating member 440, including the ends of the insulating film 450, may extend to the end cap 420 and interfere with the end cap 420, so that during the welding process between the end cap 420 and the shell 410, the insulating film 450 film is vaporized at higher welding temperature to generate gas, and the gas overflows through a weld pool, causing formation of burst points and pinholes at the weld seam.

Therefore, according to the embodiment of the present application, providing the first avoidance structures 4521 at the end portions of the second coverage areas 452 close to the insulating member 440 can prevent the insulating film 450 from interfering with the connection between the end cap 420 and the shell 410 and thus prevent the insulating film 450 from getting too close to the weld pool and vaporizing during the welding process, so as to reduce or avoid the formation of burst points and pinholes at the weld seam between the end cap 420 and the shell 410, thereby improving the quality of the battery cell 400.

In some embodiments, the two second coverage areas 452 are respectively connected to two sides of one first coverage area 451.

The two sides of the first coverage area 451 specifically refer to the two sides of the first coverage area 451 in the second direction.

According to the solution described above, in the enclosing direction of the insulating film 450, the two second coverage areas 452 each include one end of one insulating film 450. The interference with the end cap 420 is most likely to occur at the end of the insulating film 450, and providing the first avoidance structures 4521 at this part can prevent or avoid the insulating film 450 from interfering with the connection between the end cap 420 and the shell 410 to a greater extent.

In some embodiments, the first avoidance structure 4521 is provided at an end portion of the second coverage area 452 that is away from the first coverage area 451 connected to the second coverage area.

Specifically, the first avoidance structure 4521 is provided at the end portion of the second coverage area 452 that is away from the first coverage area 451 connected to the second coverage area, and is located at the end portion of the second coverage area 452 close to the end cap 420.

According to the solution described above, when the second coverage area 452 is connected to the first coverage area 451, the end of the insulating film 450 is located at the end portion of the second coverage area 452 away from the first coverage area 451 connected to the second coverage area, so that providing the first avoidance structure 4521 at this part can prevent or avoid the insulating film 450 from interfering with the connection between the end cap 420 and the shell 410 to the greatest extent.

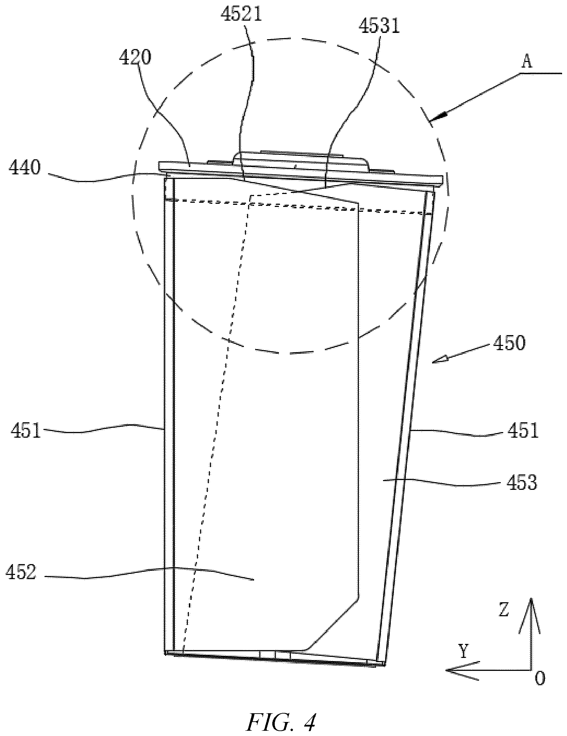

As shown in FIGS. 4, 5, 6, 7 and 8, in some embodiments, the first avoidance structure 4521 is a chamfer or a notch.

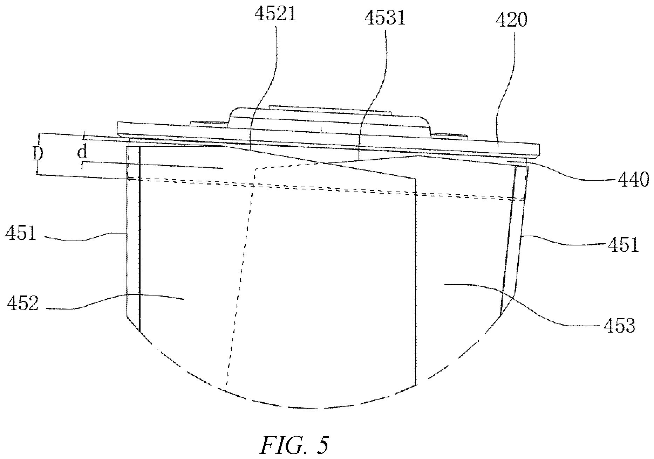

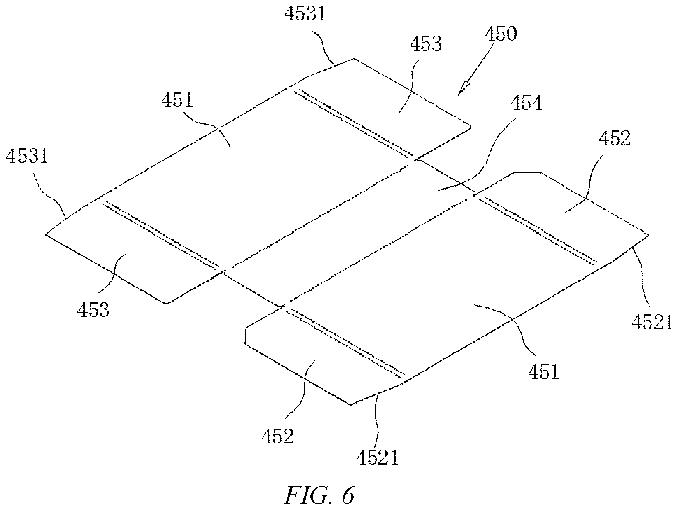

FIG. 4 shows a structure in which the first avoidance structure in the embodiment of the present application is a chamfer, FIG. 5 is a structural schematic enlarged diagram of part A in FIG. 4, and FIG. 6 is a structural schematic diagram of the insulating film in FIG. 4 in an unfolded state, with the first avoidance structure 4521 being a chamfer. As shown in FIGS. 5 and 6, the chamfer refers to a structure including a continuous cutting boundary which is part of the edge of the insulating film 450, the chamfer may be a bevel or a rounded corner, and of course, the chamfer may not be set strictly in a conventional form, and any structure similar to a bevel or a rounded corner may be considered as a chamfer. The range of the chamfer is related to the distance between the end cap 420 and the end of the insulating film 450 close to the end cap 420. The closer the insulating film 450 is to the end cap 420, the larger the range of the chamfer; and the farther the insulating film 450 is from the end cap 420, the smaller the range of the chamfer.

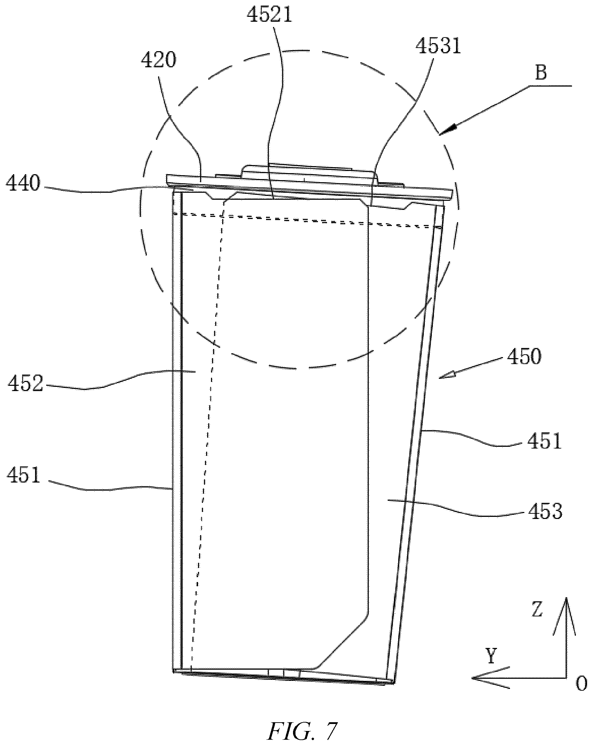

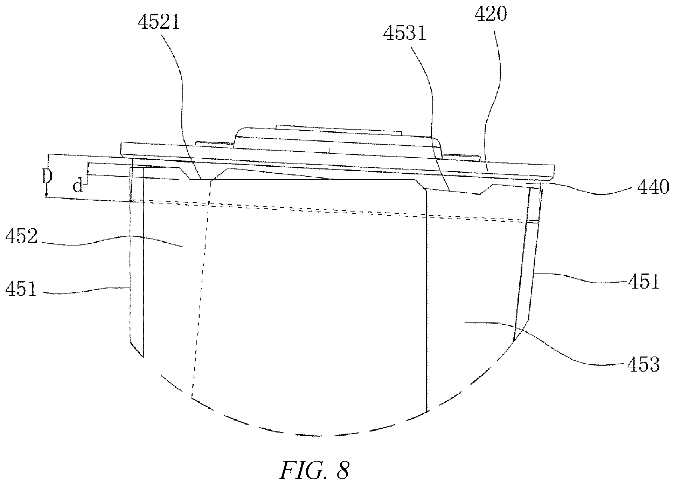

FIG. 7 shows a structure in which the first avoidance structure 4521 in the embodiment of the present application is a notch, and FIG. 8 is a structural schematic enlarged diagram of part B in FIG. 7. As shown in FIG. 8, the notch may include multiple cutting boundaries, which intersect each other in pairs, and each of which is part of structure of the edge of the insulating film 450. The range of the notch is related to the distance between the end cap 420 and the end of the insulating film 450 close to the end cap 420. The closer of the insulating film 450 is to the end cap 420, the larger the range of the notch; and the farther the insulating film 450 is from the end cap 420, the smaller the range of the notch.

According to the solution described above, the chamfer or the notch is a structure formed on the insulating film 450 by means of material removal, and therefore both the structures can reduce the size of the insulating film 450 to prevent the insulating film 450 from interfering with the connection between the end cap 420 and the shell 410.

As shown in FIGS. 5 and 8, in some embodiments, the dimension d of the first avoidance structure 4521 in a thickness direction of the insulating member 440 is less than the thickness D of the insulating member 440 at a connection with the insulating film 450.

According to the solution described above, the first avoidance structure 4521 prevents the insulating film 450 from extending from the insulating member 440 to the end cap 420 and then interfering with the connection between the end cap 420 and the shell 410, but the first avoidance structure 4521 will not affect the connection between the insulating film 450 and the insulating member 440, so that the insulating film 450 can be connected to the insulating member 440 and then cover the electrode assembly 430, further preventing the electrode assembly 430 from being insulated from the shell 410.

In some embodiments, the insulating film 450 does not exceed the insulating member 440 in the direction of the electrode assembly 430 towards the end cap 420.

The situation where the insulating film 450 does not exceed the insulating member 440 includes the edge of the insulating film 450 being within the range of the insulating member 440, and the edge of the insulating film 450 being flush with the edge of the insulating member 440. It should be noted that the edge of the insulating film 450 may extend towards the end cap 420 and cannot exceed the range of the insulating member 440 due to its short length. Alternatively, the insulating film 450 may also extend towards the end cap 420, and then abut on the end cap 420 and be bent after reaching the edge of the insulating member 440 that intersects the end cap 420. The insulating film may be bent along the surface of the side of the end cap 420 close to the insulating member 440, or be bent towards the electrode assembly 430, as long as the insulating film 450 does not extend to the edge of the end cap 420 that is welded to the shell 410.

According to the solution described above, since the insulating film 450 does not exceed the insulating member 440 in the direction of the electrode assembly 430 towards the end cap 420, the insulating film 450 will not extend to the edge of the end cap 420 and thus will not interfere with the welding between the end cap 420 and the shell 410.

As shown in FIGS. 4, 5, 6, 7 and 8, in some embodiments, the insulating film 450 further includes two third coverage areas 453. The two third coverage areas 453 are respectively connected to the two sides of the other first coverage area 451, and the two third coverage areas 453 are respectively disposed corresponding to two second surfaces 432, one third coverage area 453 and one second coverage area 452 jointly covering one second surface 432, the other third coverage area 453 and the other second coverage area 452 jointly covering the other second surface 432, and the end portion of the third coverage area 453 close to the insulating member 440 being provided with a second avoidance structure 4531 to prevent the insulating film 450 from interfering with the connection between the end cap 420 and the shell 410.

In conjunction with the foregoing embodiments, it should be understood that the insulating film 450 includes two first coverage areas 451, two second coverage areas 452 and two third coverage areas 453, the two second coverage areas 452 being respectively connected to the two sides of one first coverage area 451, the two third coverage areas 453 being respectively connected to the two sides of the other first coverage area 451, and specifically the two third coverage areas 453 being respectively connected to the two sides of the other first coverage area 451 in the second direction.

It should be noted that the third coverage area 453 may fit with the second surface 432 or may not fit with the second surface 432, and the width of the third coverage area 453 in the first direction may be greater than the width of the second surface 432 in the first direction, or may be less than the width of the second surface 432 in the first direction.

The second avoidance structure 4531 may be formed by means of cutting off the end of the third coverage area 453 close to the end cap 420, or by means of bending the part of the third coverage area 453 close to the end cap 420 away from the end cap 420, as long as the insulating film 450 can be prevented from getting too close to the end cap 420.

According to the solution described above, when the third coverage areas 453 are connected to the first coverage areas 451, the other two ends of the insulating film 450 are located in the third coverage areas 453 in the enclosing direction of the insulating film 450, so that providing the second avoidance structures 4531 here can prevent the third coverage areas 453 from interfering with the connection between the end cap 420 and the shell 410 and thus prevent the third coverage areas 453 from getting too close to the weld pool and vaporizing during the welding process, so as to reduce or avoid the formation of the burst points and pinholes at the weld seam between the end cap 420 and the shell 410, thereby improving the quality of the battery cell 400.

In some embodiments, the second avoidance structure 4531 is provided at an end portion of the third coverage area 453 that is away from the first coverage area 451 connected to the third coverage area.

Specifically, the second avoidance structure 4531 is provided at the end portion of the third coverage area 453 that is away from the first coverage area 451 connected to the third coverage area, and is located at the end portion of the third coverage area 453 close to the end cap 420.

According to the solution described above, when the third coverage area 453 is connected to the first coverage area 451, the end of the insulating film 450 is located at the end portion of the third coverage area 453 that is away from the first coverage area 451 connected to the third coverage area, so that providing the second avoidance structure 4531 here can prevent or avoid the third coverage areas 453 from interfering with the connection between the end cap 420 and the shell 410 to the greatest extent.

As shown in FIGS. 4, 5, 6, 7 and 8, in some embodiments, the second avoidance structure 4531 is a chamfer or a notch.

The second avoidance structure 4531 shown in FIGS. 4, 5 and 6 is a chamfer. As shown in FIGS. 5 and 6, the chamfer refers to a structure including a continuous cutting boundary which is part of the edge of the insulating film 450, the chamfer may be a bevel or a rounded corner, and of course, the chamfer may not be set strictly in a conventional form, and any structure similar to a bevel or a rounded corner may be considered as a chamfer. The range of the chamfer is related to the distance between the end cap 420 and the end of the insulating film 450 close to the end cap 420. The closer the insulating film 450 is to the end cap 420, the larger the range of the chamfer; and the farther the insulating film 450 is from the end cap 420, the smaller the range of the chamfer.

The second avoidance structure 4531 shown in FIGS. 7 and 8 is a notch. As shown in FIGS. 7 and 8, the notch may include multiple cutting boundaries, which intersect each other in pairs, and each of which is part of structure of the edge of the insulating film 450. The range of the notch is related to the distance between the end cap 420 and the end of the insulating film 450 close to the end cap 420. The closer of the insulating film 450 is to the end cap 420, the larger the range of the notch; and the farther the insulating film 450 is from the end cap 420, the smaller the range of the notch.

According to the solution described above, the chamfer or the notch is a structure formed on the insulating film 450 and in the third coverage area 453 by means of material removal, and therefore both the structures can reduce the size of the insulating film 450 to prevent the insulating film 450 from interfering with the connection between the end cap 420 and the shell 410.

As shown in FIGS. 4, 5, 7 and 8, in some embodiments, the second coverage area 452 at least partially overlaps with the third coverage area 453.

When the second coverage area 452 at least partially overlaps with the third coverage area 453, at the part corresponding to any second surface 432, the second coverage area 452 may be located between the third coverage area 453 and the second surface 432, or the third coverage area 453 may be located between the second coverage area 452 and the second surface 432. In addition, there is no limitation on the overlapping area of the first coverage area 451 and the second coverage area 452.

According to the solution described above, the third coverage area 453 overlaps with the second coverage area 452 to prevent formation of a gap in the insulating film 450, so as to prevent the electrode assembly 430 from coming into contact with the shell at the gap of the insulating film 450 due to the insulating film 450 being unable to completely covering the electrode assembly 430.

As shown in FIGS. 5 and 8, in some embodiments, the second avoidance structure 4531 at least partially overlaps with the first avoidance structure 4521.

When the second coverage area 452 at least partially overlaps with the third coverage area 453, the positions where the second coverage area 452 and the third coverage area 453 can interfere with the connection between the end cap 420 and the shell 410 are basically consistent. Therefore, by means of configuring the second avoidance structure 4531 to at least partially overlap with the first avoidance structure 4521, neither the second coverage area 452 nor the third coverage area 453 interferes with the connection between the end cap 420 and the shell 410.

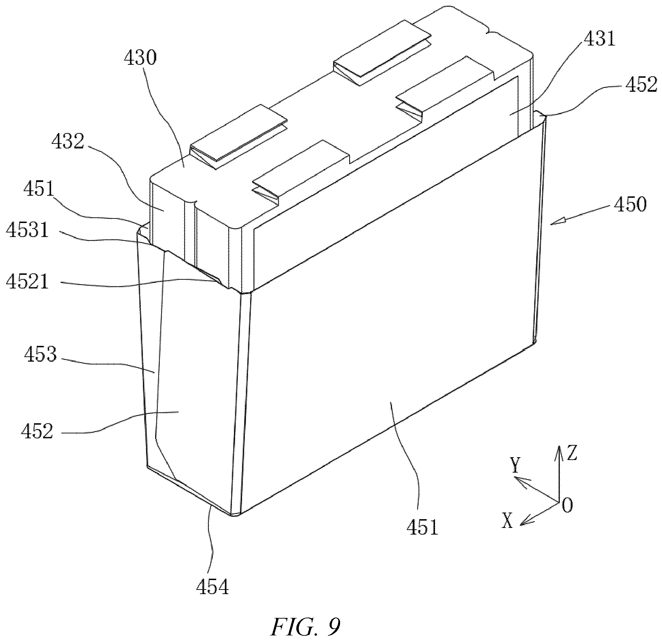

FIG. 9 is a structural schematic exploded diagram of an electrode assembly and an insulating film. As shown in FIG. 9, in some embodiments, the width of the second surface 432 in the first direction is less than the width of the first surface 431 in the second direction.

According to the solution described above, the second surface 432 is narrower than the first surface 431, and the second surface 432 has a smaller amount of expansion than the first surface 431 when the electrode assembly 430 expands during charging and discharging, the second coverage area 452 corresponds to the second surface 432, and the first avoidance structure 4521 is located on the second surface 432, so that the first avoidance structure 4521 corresponds to the second surface 432, and when the electrode assembly 430 expands, the second surface 432 will not break the separator from the first avoidance structure 4521 due to the small amount of expansion and thus will not come into contact with the shell.

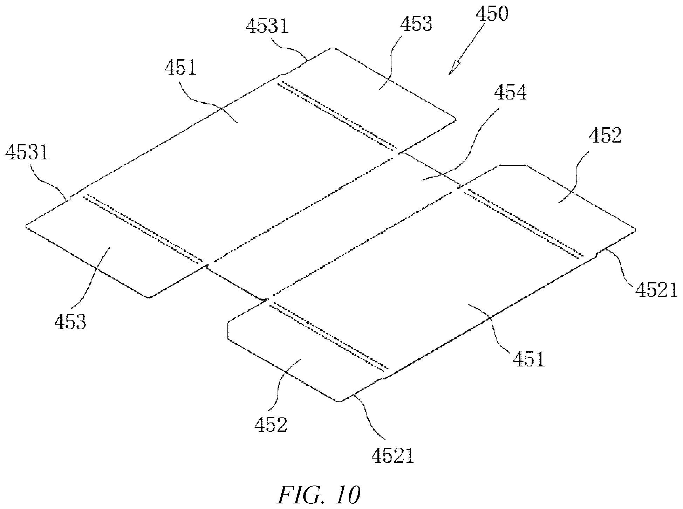

FIG. 10 is a structural schematic diagram of an insulating film according to an embodiment of the present application in an unfolded state, with the first avoidance structure 4521 being a notch. As shown in FIGS. 6, 9 and 10, in some embodiments, the insulating film 450 further includes a fourth coverage area 454, the fourth coverage area 454 being connected between the two first coverage areas 451 and covering the end surface of the electrode assembly 430 away from the end cap 420.

It may be seen from FIGS. 6 and 9 that there are creases between different coverage areas. When assembled to the battery cell 400, the insulating film 450 may be folded along the creases such that the insulating film 450 covers the electrode assembly 430 in a three-dimensional state (as shown in FIG. 8), and the insulating film 450 can cover five surfaces of the electrode assembly 430.

According to the solution described above, the electrode assembly 430 is completely isolated from the shell 410 by means of the insulating film 450, preventing the electrode assembly 430 from coming into contact with the shell 410 at any position.

In some embodiments, the insulating film 450 is connected to a peripheral wall of the insulating member 440 by means of hot melting.
hot-melting connection refers to a connection method in which non-metallic materials are heated to reach a melting point and then mixed in liquid state to connect together. In this embodiment of the present application, two connected non-metallic components are the insulating film 450 and the insulating member 440, and the insulating film 450 and the insulating member 440 may be connected continuously or intermittently along the circumference.

According to the solution described above, this hot-melting connection method can quickly achieve the connection between the insulating film 450 and the insulating member 440 to improve the connection efficiency, and there is no need to use other media for connection, thereby saving the cost.

In some embodiments, the dimension of the insulating member 440 in the first direction is greater than a distance between the two first surfaces 431, and/or the dimension of the insulating member 440 in the second direction is greater than a distance between the two second surfaces 432.

According to the solution described above, in order to allow the insulating film 450 to cover a surface of the same side where both the electrode assembly 430 and the insulating member 440 are located, the distance between the two first coverage areas 451 increases gradually and/or the distance between the second coverage areas 452 increases gradually in the direction of the electrode assembly 430 towards the end cap 420. When the dimension of the insulating member 440 in the first direction is greater than the distance between the two first surfaces 431, the distance between the two first coverage areas 451 increases gradually in the direction of the electrode assembly 430 towards the end cap 420. When the dimension of the insulating member 440 in the second direction is greater than the distance between the two second surfaces 432, the distance between the two second coverage areas 452 increases gradually in the direction of the electrode assembly 430 towards the end cap 420. When the dimension of the insulating member 440 in the first direction is greater than the distance between the two first surfaces 431, and the dimension of the insulating member 440 in the second direction is greater than the distance between the two second surfaces 432, the distance between the first coverage areas 451 and the distance between the two second coverage areas 452 are both increased gradually, so that the insulating film 450 extends from the outside of the electrode assembly 430 to the outside of the insulating member 440, gets close to the insulating member 440, and is then connected to the insulating member 440.

In some embodiments, a distance between the two first surfaces 431 increases gradually, and/or a distance between the two second surfaces 432 increases gradually in a direction of the electrode assembly 430 towards the end cap 420.

According to the solution described above, in order to adapt to a change in the distance between the two first surfaces 431 and/or the distance between the two second surfaces 432 of the electrode assembly 430, the distance between the first coverage areas 451 of the insulating film 450 increases gradually and/or the distance between the two second coverage areas 452 thereof increases gradually in the direction of the electrode assembly 430 towards the end cap 420. When the distance between the two first surfaces 431 increases gradually in the direction of the electrode assembly 430 towards the end cap 420, the distance between the two first coverage areas 451 of the insulating film 450 increases gradually. When the distance between the two second surfaces 432 increases gradually in the direction of the electrode assembly 430 towards the end cap 420, the distance between the two second coverage areas 452 of the insulating film 450 increases gradually. When the distance between the two first surfaces 431 increases gradually and the distance between the two second surfaces 432 increases gradually in the direction of the electrode assembly 430 towards the end cap 420, both the distance between the two first coverage areas 451 of the insulating film 450 and the distance between the two second coverage areas 452 increases gradually, so that the insulating film 450 adapts to the shape of the electrode assembly 430 and covers the electrode assembly 430.

An embodiment of the present application provides a battery 200, including the battery cell 400 of any one of the embodiments described above.

According to the solution described above, there will be no burst point or pinhole at the weld seam between the end cap 420 and the shell 410 of the battery cell 400, or the probability of occurrence of burst points and pinholes is small, thereby improving the quality of the battery cell 400 so as to improve the quality of the battery 200.

An embodiment of the present application further provides a power consuming device, including the battery cell 400 of any one of the embodiments, the battery cell 400 being configured to supply electric energy.

According to the solution described above, there will be no burst point or pinhole at the weld seam between the end cap 420 and the shell 410 of the battery cell 400, or the probability of occurrence of burst points and pinholes is small, which improves the quality of the battery cell 400, enables the battery cell 400 to supply power to the power consuming device for a long time, and prolongs the service life and improves the safety of the power consuming device.

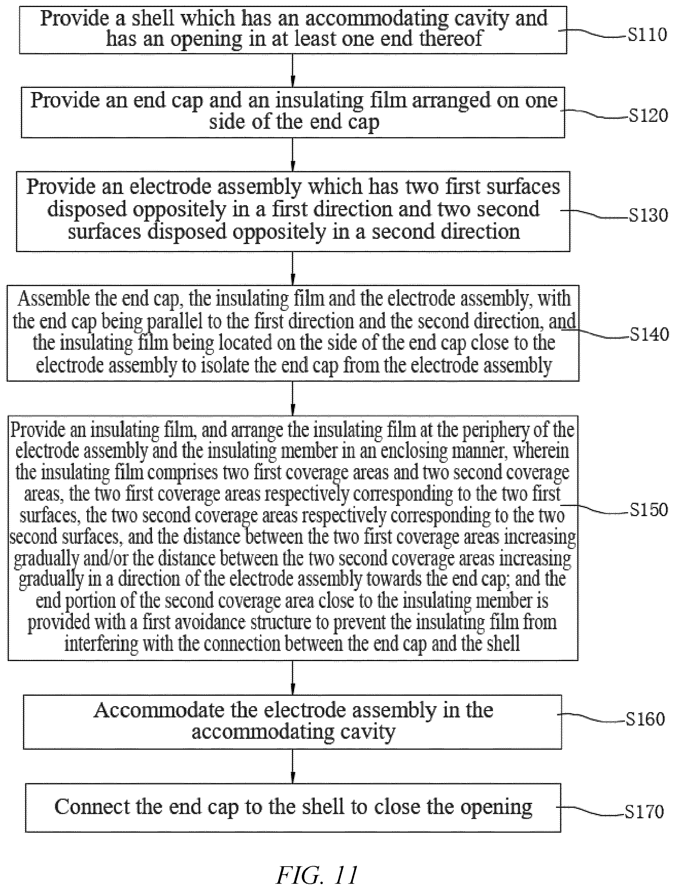

As shown in FIG. 11, an embodiment of the present application further provides a method for manufacturing a battery cell 400, the method including the following steps.

At S110, a shell 410 is provided, the shell 410 including an accommodating cavity and including an opening in at least one end thereof.

At S120, an end cap 420 and an insulating member 440 are provided, the insulating member 440 being arranged on one side of the end cap 420.

At S130, an electrode assembly 430 is provided, the electrode assembly 430 including two first surfaces 431 oppositely disposed in a first direction, and two second surfaces 432 oppositely disposed in a second direction.

At S 140, the end cap 420, the insulating member 440 and the electrode assembly 430 are assembled, with the insulating member 420 being parallel to the first direction and the second direction, and the insulating member 440 being located on one side of the end cap 420 close to the electrode assembly 430 to isolate the end cap 420 from the electrode assembly 430.

At S150, an insulating film 450 is provided, and the insulating film 450 is arranged at a periphery of the electrode assembly 430 and the insulating member 440 in an enclosing manner, wherein the insulating film 450 includes two first coverage areas 451 and two second coverage areas 452, the two first coverage areas 451 being respectively provided corresponding to the two first surfaces 431, the two second coverage areas 452 being respectively provided corresponding to the two second surfaces 432, and a distance between the two first coverage areas 451 increasing gradually and/or a distance between the two second coverage areas 452 increasing gradually in a direction of the electrode assembly 430 towards the end cap 420; and an end portion of the second coverage area 452 close to the insulating member 440 is provided with a first avoidance structure 4521 to prevent the insulating film 450 from interfering with the connection between the end cap 420 and the shell 410.

At S160, the electrode assembly 430 is accommodated in the accommodating cavity.

At S 170, the end cap 420 is connected to the shell 410 to close the opening.

The order of the above steps is not performed completely according to the above sequence. In the process of actually manufacturing the battery cell 400, the order of the above steps may be adjusted according to the actual situation, or may be performed simultaneously, or other steps may be added to manufacture other components of the battery cell 400, so as to finally obtain the desired battery cell 400. For example, the order of steps S110, S120 and S130 may be adjusted or performed synchronously. Specifically, reference is made to some of the embodiments of the battery cell 400.

In addition, any methods for manufacturing related components and connecting the related components shall fall within the scope of protection of the embodiments of the present application, which will not be repeated in the embodiments of the present application.

In the method described above, on the premise of ensuring a good insulation effect between the electrode assembly 430 and the end cap 420 and between the electrode assembly and the shell 410, providing the first avoidance structures 4521 at the end portions of the second coverage areas 452 close to the insulating member 440 can prevent the insulating film 450 from interfering with the connection between the end cap 420 and the shell 410 and thus prevent the insulating film 450 from getting too close to the weld pool and vaporizing during the welding process, so as to reduce or avoid the formation of burst points and pinholes at the weld seam between the end cap 420 and the shell 410, thereby improving the quality of the manufactured battery cell 400.

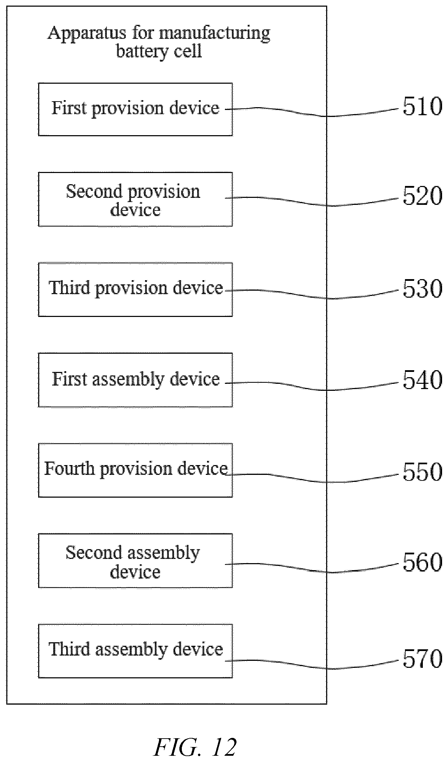

As shown in FIG. 12, an embodiment of the present application further provides an apparatus for manufacturing a battery cell, the apparatus including:
a first provision device 510 configured to provide a shell 410, the shell 410 including an accommodating cavity and including an opening in at least one end thereof;
a second provision device 520 configured to provide an end cap 420 and an insulating member 440, and the insulating member 440 being provided on one side of the end cap 420;
a third provision device 530 configured to provide an electrode assembly 430, the electrode assembly 430 including two first surfaces 431 oppositely disposed in a first direction and two second surfaces 432 oppositely disposed in a second direction;
a first assembly device 540 configured to assemble the end cap 420, the insulating member 440 and the electrode assembly 430, with the end cap 420 being parallel to the first direction and the second direction, and the insulating member 440 being located on one side of the end cap 420 close to the electrode assembly 430 to isolate the end cap 420 from the electrode assembly 430;
a fourth provision device 550 configured to provide an insulating film 450 and arrange the insulating film 450 at a periphery of the electrode assembly 430 and the insulating member 440 in an enclosing manner, wherein the insulating film 450 includes two first coverage areas 451 and two second coverage areas 452, the two first coverage areas 451 being respectively provided corresponding to the two first surfaces 431, the two second coverage areas 452 being respectively provided corresponding to the two second surfaces 432, and a distance between the two first coverage areas 451 increasing gradually and/or a distance between the two second coverage areas 452 increasing gradually in a direction of the electrode assembly 430 towards the end cap 420; and an end portion of the second coverage area 452 close to the insulating member 440 is provided with a first avoidance structure 4521 to prevent the insulating film 450 from interfering with the connection between the end cap 420 and the shell 410;
a second assembly device 560 configured to accommodate the electrode assembly 430 in the accommodating cavity; and
a third assembly device 570 configured to connect the end cap 420 to the shell 410 to close the opening.

In the apparatus described above, the insulating member 440 provided by the second device 520 provides a good insulation effect between the electrode assembly 430 and the end cap 420, and the insulating film 450 provided by the fifth device 550 provides a good insulation effect between the electrode assembly 430 and the shell 410. On the premise of ensuring a good insulation effect between the electrode assembly 430 and the end cap 420 and between the electrode assembly and the shell 410, providing the first avoidance structures 4521 at the end portions of the second coverage areas 452 close to the insulating member 440 can prevent the insulating film 450 from interfering with the connection between the end cap 420 and the shell 410 and thus prevent the insulating film 450 from getting too close to the weld pool and vaporizing during the welding process, so as to reduce or avoid the formation of burst points and pinholes at the weld seam between the end cap 420 and the shell 410, thereby improving the quality of the manufactured battery cell 400.

In conclusion, according to the embodiment of the present application, providing the first avoidance structures 4521 at the end portions of the second coverage areas 452 close to the insulating member 440 can prevent the insulating film 450 from interfering with the connection between the end cap 420 and the shell 410 and thus prevent the insulating film 450 from getting too close to the weld pool and vaporizing during the welding process, so as to reduce or avoid the formation of burst points and pinholes at the weld seam between the end cap 420 and the shell 410, thereby improving the quality of the battery cell 400.

Those skilled in the art should understand that, although some of the embodiments herein include some features included in other embodiments, the combination of the features of different embodiments means being within the scope of the present application and forms different embodiments. For example, in the claims, any one of the claimed embodiments may be used in any combination.

In conclusion, the above embodiments are merely used for illustrating rather than limiting the technical solutions of the present application. Although the present application has been illustrated in detail with reference to the foregoing embodiments, it should be understood by those of ordinary skill in the art that modifications can still be made to the technical solutions described in the foregoing embodiments, or equivalent substitutions of some technical features thereof are also possible; and while these modifications or substitutions do not make the essence of the corresponding technical solutions depart from the spirit and scope of the technical solutions of the embodiments of the present application.

## Claims

1. A battery cell, comprising:
a shell comprising an accommodating cavity and an opening in at least one end thereof;
an end cap closing the opening;
an electrode assembly accommodated in the accommodating cavity, the electrode assembly comprising two first surfaces oppositely disposed in a first direction and two second surfaces oppositely disposed in a second direction, the first direction and the second direction being parallel to the end cap;
an insulating member arranged on one side of the end cap close to the electrode assembly to isolate the end cap from the electrode assembly; and
an insulating film arranged at a periphery of the electrode assembly and the insulating member in an enclosing manner, wherein the insulating film comprises two first coverage areas and two second coverage areas, the two first coverage areas respectively corresponding to the two first surfaces, the two second coverage areas respectively corresponding to the two second surfaces, and a distance between the two first coverage areas increasing gradually and/or a distance between the two second coverage areas increasing gradually in a direction of the electrode assembly towards the end cap; and
an end portion of the second coverage area close to the insulating member is provided with a first avoidance structure to prevent the insulating film from interfering with the connection between the end cap and the shell.

2. The battery cell according to claim 1, wherein the two second coverage areas are respectively connected to two sides of one of the first coverage areas.

3. The battery cell according to claim 2, wherein the first avoidance structure is provided at an end portion of the second coverage area that is away from the first coverage area connected to the second coverage area.

4. The battery cell according to any one of claims 1-3, wherein the first avoidance structure is a chamfer or a notch.

5. The battery cell according to any one of claims 1-4, wherein the dimension of the first avoidance structure in a thickness direction of the insulating member is less than the thickness of the insulating member at the connection with the insulating film.

6. The battery cell according to any one of claims 1-5, wherein the insulating film does not exceed the insulating member in the direction of the electrode assembly towards the end cap.

7. The battery cell according to any one of claims 2-6, wherein the insulating film further comprises two third coverage areas which are respectively connected to the two sides of the other first coverage area and are respectively disposed corresponding to the two second surfaces, one of the third coverage areas and one of the second coverage areas jointly covering one of the second surfaces, the other third coverage area and the other second coverage area jointly covering the other second surface, and an end portion of the third coverage area close to the insulating member being provided with a second avoidance structure to prevent the insulating film from interfering with the connection between the end cap and the shell.

8. The battery cell according to claim 7, wherein the second avoidance structure is provided at an end portion of the third coverage area that is away from the first coverage area connected to the third coverage area.

9. The battery cell according to claim 7 or 8, wherein the second avoidance structure is a chamfer or a notch.

10. The battery cell according to any one of claims 7-9, wherein the second coverage area at least partially overlaps with the third coverage area.

11. The battery cell according to any one of claims 7-10, wherein the second avoidance structure at least partially overlaps with the first avoidance structure.

12. The battery cell according to any one of claims 1-11, wherein the width of the second surface in the first direction is less than that of the first surface in the second direction.

13. The battery cell according to any one of claims 1-12, wherein the insulating film further comprises a fourth coverage area, which is connected between the two first coverage areas and covers an end surface of the electrode assembly away from the end cap.

14. The battery cell according to any one of claims 1-13, wherein the insulating film is connected to a peripheral wall of the insulating member by means of hot melting.

15. The battery cell according to any one of claims 1-14, wherein the dimension of the insulating member in the first direction is greater than a distance between the two first surfaces, and/or, the dimension of the insulating member in the second direction is greater than a distance between the two second surfaces.

16. A battery, comprising a battery cell according to any one of claims 1-15.

17. A power consuming device, comprising a battery cell according to any one of claims 1-15, the battery cell being configured to supply electric energy.

18. A method for manufacturing a battery cell, the method comprising:
providing a shell which comprises an accommodating cavity and comprises an opening in at least one end thereof;
providing an end cap and an insulating member arranged on one side of the end cap;
providing an electrode assembly which comprises two first surfaces oppositely disposed in a first direction and two second surfaces oppositely disposed in a second direction;
assembling the end cap, the insulating member and the electrode assembly, with the end cap being parallel to the first direction and the second direction, and the insulating member being located on one side of the end cap close to the electrode assembly to isolate the end cap from the electrode assembly; and
providing an insulating film, and arranging the insulating film at a periphery of the electrode assembly and the insulating member in an enclosing manner, wherein the insulating film comprises two first coverage areas and two second coverage areas, the two first coverage areas respectively corresponding to the two first surfaces, the two second coverage areas respectively corresponding to the two second surfaces, and a distance between the two first coverage areas increasing gradually and/or a distance between the two second coverage areas increasing gradually in a direction of the electrode assembly towards the end cap; and an end portion of the second coverage area close to the insulating member is provided with a first avoidance structure to prevent the insulating film from interfering with the connection between the end cap and the shell;
accommodating the electrode assembly in the accommodating cavity; and
connecting the end cap to the shell to close the opening.

19. An apparatus for manufacturing a battery cell, the apparatus comprising:
a first provision device configured to provide a shell which comprises an accommodating cavity and comprises an opening in at least one end thereof;
a second provision device configured to provide an end cap and an insulating member arranged on one side of the end cap;
a third provision device configured to provide an electrode assembly which comprises two first surfaces oppositely disposed in a first direction and two second surfaces oppositely disposed in a second direction;
a first assembly device configured to assemble the end cap, the insulating member and the electrode assembly, with the end cap being parallel to the first direction and the second direction, and the insulating member being located on one side of the end cap close to the electrode assembly to isolate the end cap from the electrode assembly;
a fourth provision device configured to provide an insulating film and arrange the insulating film at a periphery of the electrode assembly and the insulating member in an enclosing manner, wherein the insulating film comprises two first coverage areas and two second coverage areas, the two first coverage areas respectively corresponding to the two first surfaces, the two second coverage areas respectively corresponding to the two second surfaces, and a distance between the two first coverage areas increasing gradually and/or a distance between the two second coverage areas increasing gradually in a direction of the electrode assembly towards the end cap; and an end portion of the second coverage area close to the insulating member is provided with a first avoidance structure to prevent the insulating film from interfering with the connection between the end cap and the shell;
a second assembly device configured to accommodate the electrode assembly in the accommodating cavity; and
a third assembly device configured to connect the end cap to the shell to close the opening.
